# EUROPEAN PATENT APPLICATION

(11) **EP 4 763 901 A1**
(43) Date of publication of application: **24.06.2026**
(21) Application number: 24222473.1
(22) Date of filing: 20.12.2024
(51) Int. Cl.: C08K 3/04, C08L 23/283, C08K 3/06, C08K 3/34

(54) **HALOBUTYL RUBBER COMPOSITIONS CONTAINING LIGNIN-BASED FILLER FOR OPTIMIZING CURING TIME**

(71) Applicant: UPM-Kymmene Corporation, 00100 Helsinki (FI)
(72) Inventor: FINGER, Sebastian, 00100 Helsinki (FI); GALL, Barbara, 00100 Helsinki (FI); SEKAR, Priyanka, 00100 Helsinki (FI); SCHMAUCKS, Gerd, 00100 Helsinki (FI)
(74) Representative: Steffan & Kiehne Patentanwälte PartG mbB

(57) **Abstract**

The present invention relates to a curable rubber composition comprising at least one halobutyl rubber, at least one curing agent, which is suitable for curing the at least one halobutyl rubber and which comprises at least one of sulfur, amines, phenolic resins, hydroquinones and peroxides, and at least one lignin-based filler F1, which is different from carbon black, and which has an STSA surface area of up to 200 m²/g, wherein the curable rubber composition comprises no or less than 0.45 phr 2,2'-dibenzothiazolyl disulfide (MBTS), and wherein the total amount of any organic constituents of the curable rubber composition, which are suitable to retard the t₉₀ curing time, including 2,2'-dibenzothiazolyl disulfide, and which are different from the at least one curing agent and the at least one halobutyl rubber and the at least one lignin-based filler F1, is less than 1.85 phr, a kit-of-parts comprising the rubber composition in spatially separated form, a cured rubber composition obtainable from said curable rubber composition, a use of the aforementioned compositions for manufacturing articles, parts and/or components, thereby obtained articles, parts and/or components, and a process for preparing said article, part and/or component.

## Description

The present invention relates to a curable rubber composition, a kit-of-parts comprising the constituents of said curable rubber composition in spatially separated form, a cured rubber composition obtainable from the curable rubber composition or the kit-of-parts, several uses related to one of the fillers being present in the curable rubber composition, a use of said composition, of the kit-of-parts or of the cured rubber composition for manufacturing articles, parts and/or components, to said articles, parts and/or components per se, and to processes for preparing them.

### Background of the invention

A typical modern tire such as a pneumatic tire comprises multiple parts, which are combined in the tire in such a manner that the manifold directed forces affecting the tires are optimally addressed. In particular, most tires generally comprise at least a tread, at least one belt, a carcass ply, sidewalls, bead fillers, bead wires and a so-called inner liner.

The inner liner is a radially inwardly disposed layer and the inner-most layer of a tire structure, which is responsible for maintaining the internal air pressure, as the air pressure significantly affects the driving characteristics and durability of the tire. In addition, the internal pressure also has an influence on the rolling resistance of the tire. A decrease in air pressure leads to a higher dynamic deformation of the tire which in turn causes the unwanted conversion of a part of the kinetic energy into thermal energy. In addition, the inner liner protects the carcass against diffusion of air and humidity therein and prevents any damage to the strength-providing elements of the carcass and/or the belt. For the inner liner to remain airtight to the largest possible extent, it should also have good tear and fatigue resistance so that no tears develop during driving which would affect the air tightness.

Due to this specific requirement profile, rubber compounds for inner liners have, regarding rubbers and fillers used therein as well as regarding the weight proportions of the constituents present therein relative to one another, often completely different compositions than rubber compounds used for the other tire parts, but they still need to be compatible with the adjacent tire parts and especially need to have good adhesion to those. In addition to the type of rubbers, minimum quantities for different rubbers in the rubber compound may also play a role, as do various specific parameters and properties of the fillers that can be used.

Therefore, inner liners are usually based on butyl rubbers or halobutyl rubbers, typically bromobutyl and/or chlorobutyl rubbers, and are occasionally blended with other rubbers. By additional dosing of voluminous fillers with low or no activity to the rubber compound of the inner liners, their airtightness can be further increased. The fillers used to date particularly include carbon blacks such as furnace carbon blacks.

To prevent formation of cracks under dynamic loads, inner liners must have a balanced modulus of elasticity and a matched hardness, which is usually in conflict with a high proportion of non-active fillers. Therefore, mineral oil-based softening agents are often added to the rubber composition, which reduce the modulus of elasticity and the hardness of the composition, but at the same time increase the gas permeability again, which results in a relatively narrow optimum range for the amounts of mineral oil-based softening agent and filler used.

In addition, many fillers, such as the carbon blacks, e.g. of the type N 660, have relatively high densities of about 1.8 g/cm³ or higher. Accordingly, the rubber compositions compounded with such fillers also have a higher density and thus a higher weight for the same volume. However, the higher density of the filler also causes a higher weight of the inner liner, and ultimately of the tire, which in turn entails higher fuel consumption. Further, industrial carbon blacks are produced petrochemically by incomplete combustion or pyrolysis of hydrocarbons. The use of fossil energy sources for production of fillers, however, must be avoided or reduced to a minimum from an environmental point of view. It is, e.g., known to use lignin-based fillers for at least partial replacement of carbon blacks in rubber compositions. For example, WO 2020/140155 A1 discloses lignin-reinforced vulcanizates prepared from halobutyl rubbers, lignins and co-reinforcing agents comprising carbon black and/or silica. Moreover, WO 2022/063841 A1, and WO 2023/180405 A1 disclose the use of lignin-based fillers that can substitute industrial carbon blacks for the preparation of halobutyl rubber compositions for use in inner liners of tires as well. Further, WO 2024/017455 A1 discloses a composition comprising an elastomeric polymer including halobutyl rubbers and a hydrothermally treated lignin with reduced gas permeability. These compositions can be used as gas barriers in membranes or tires.

In the tire production process, inner liners are in direct contact with the curing bladder and thus, compared to all other parts, are exposed to heat the longest. Without countermeasures, this could result in an overcuring of the inner liner, increasing its porosity as well as air permeability, and making it more prone to cracking.

To achieve a sufficient curing of the outer layers and parts and to prevent an overcuring of the inner liner at the same time, retarders, e.g., dibenzothiazyl disulfide (MBTS), are widely used to delay the curing time of the inner liner, and therefore to optimize its curing time in correlation to the curing of the other rubber layers. Such retarders and in particular MBTS have, e.g., been used as well in rubber compositions exemplified in aforementioned references WO 2022/063841 A1, WO 2024/017455 A1, WO 2023/180405 A1, and WO 2020/140155 A1.

However, the use of retarders in rubber compositions for the production of inner liners and in particular when using excessive amounts thereof, although being in general able to delay the curing time such as the t₉₀ time to prevent an overcuring, may lead to curing times such as t₉₀ times, which are not optimized, e.g., are too long or too short. Further, sometimes, while an aforementioned overcuring is prevented, the mechanical properties, e.g., the tensile strength, of resulting cured rubber compositions are negatively affected when retarders in excessive amounts are present. In addition, the use of retarders, particularly in excessive amounts, in general is not desirable, in particular for both economic and ecological reasons.

Thus, there is a need to provide rubber compositions comprising halobutyl rubbers, in particular for preparing vulcanizates thereof, by means of curing said rubber compositions, in which the amount of carbon black used as filler can be reduced as much as possible or in which the use of carbon black can even be completely avoided, and the amount of retarders, especially MBTS, can be reduced as much as possible or in which the use of retarders, especially of MBTS, can even be completely avoided, but wherein the curing time, in particularly the t₉₀ time, is still sufficiently long to prevent any undesired overcuring without, however, negatively affecting the mechanical properties of the vulcanizates, e.g., the tensile strength, and wherein further a sufficiently high M_{H} to M_{L} difference can still be provided, and wherein at the same time a sufficiently low air permeability can be provided and maintained as well, such that the rubber compositions can be effectively used for lightweight construction of suitable articles, e.g., for the manufacture of inner liners.

### Problem

It has been therefore an objective underlying the present invention to provide rubber compositions comprising halobutyl rubbers, in particular for preparing vulcanizates thereof by means of curing said rubber compositions, in which the amount of carbon black used as filler can be reduced as much as possible or in which the use of carbon black can even be completely avoided, and the amount of retarders, especially MBTS, can be reduced as much as possible or in which the use of retarders, especially of MBTS, can even be completely avoided, but wherein the curing time, in particularly the t₉₀ time, is still sufficiently long to prevent any undesired overcuring without, however, negatively affecting the mechanical properties of the vulcanizates, e.g., the tensile strength, and wherein further a sufficiently high M_{H} to M_{L} difference can still be provided, and wherein at the same time a sufficiently low air permeability can be provided and maintained as well, such that the rubber compositions can be effectively used for lightweight construction of suitable articles, e.g., for the manufacture of inner liners.

### Solution

This objective has been solved by the subject-matter of the claims of the present application as well as by the preferred embodiments thereof disclosed in this specification, i.e. by the subject matter described herein.

A first subject-matter of the present invention is a curable rubber composition comprising
at least one halobutyl rubber, which is curable by means of at least one curing agent,
at least one curing agent, which is suitable for curing the at least one halobutyl rubber and which comprises at least one of sulfur, amines, phenolic resins, hydroquinones and peroxides, and
at least one lignin-based filler F1, which is different from carbon black, and which has an STSA surface area of up to 200 m²/g,
wherein the curable rubber composition comprises no or less than 0.45 phr 2,2'-dibenzothiazolyl disulfide (MBTS), and
wherein the total amount of any organic constituents of the curable rubber composition, which are suitable to retard the t₉₀ curing time, including 2,2'-dibenzothiazolyl disulfide, and which are different from both the at least one curing agent and the at least one halobutyl rubber and the at least one lignin-based filler F1, is less than 1.85 phr.

A further subject-matter of the present invention is a kit-of-parts comprising, in spatially separated form,
as part A) at least part of a rubber composition according to the present invention, wherein part A) does, however, not comprise the at least one curing agent, which is suitable for curing the at least one halobutyl rubber and which comprises at least one of sulfur, amines, phenolic resins, hydroquinones, and peroxides,
optionally as part B) the remaining part of the rubber composition according to the present invention not being present in part A), wherein part B) does, however, not comprise the at least one curing agent, which is suitable for curing the at least one halobutyl rubber and which comprises at least one of sulfur, amines, phenolic resins, hydroquinones, and peroxides, and
as part C) the at least one curing agent, which is suitable for curing the at least one halobutyl rubber and which comprises at least one of sulfur, amines, phenolic resins, hydroquinones and peroxides.

A still further subject-matter of the present invention is a cured rubber composition, which is obtainable by curing the curable rubber composition according to the present invention, or by curing a curable rubber composition obtainable by combining and mixing both A), optionally B), and C) of the kit-of-parts according to the present invention.

Another subject-matter of the present invention is also a use of the curable rubber composition according to the present invention, of the kit-of-parts according to the present invention, or of the cured rubber composition according to the present invention, for manufacturing articles, parts and/or components, which preferably are suitable for use in the automotive and/or aerospace and/or engineering industry and/or pharmaceutical industry and/or consumer goods industry, which more preferably are suitable for the manufacture of rubber items requiring gas impermeability, especially hoses, personal protection equipment, protective clothing, pharmaceutical closures, vacuum seals and membranes, tank linings, conveyor belts, consumer products, in particular ball bladders, and tires, in particular as being used as or as at least part of inner liners of tires, even more preferably are suitable for the manufacture of air tires.

A further subject-matter of the present invention is an article, part and/or component, which is in each case obtainable from the curable rubber composition according to the present invention, from the kit-of-parts according to the present invention, or from the cured rubber composition according to the present invention, and which is suitable for use in the automotive and/or aerospace and/or engineering industry and/or pharmaceutical industry and/or consumer goods industry, which preferably is suitable for use in rubber items requiring gas impermeability, especially hoses, personal protection equipment, protective clothing, pharmaceutical closures, vacuum seals and membranes, tank linings, conveyor belts, consumer products, in particular ball bladders, and tires, in particular as being used as or as at least part of inner liners of tires, more preferably is suitable for use in air tires.

A further subject-matter of the present invention is a process for preparing the article, part and/or component according to the present invention, wherein said process comprises at least one step, according to which the curable rubber composition according to the present invention is shaped into the article, part and/or component, preferably before curing has been performed, by at least one of injection molding, compression molding, transfer molding, extrusion, coextrusion, e.g., by coextrusion of at least two rubbers, extrusion coating, laminating, calendaring, or a combination thereof, e.g., a combination of extrusion or coextrusion and calendaring.

It has been in particular surprisingly found that the rubber compositions according to the present invention comprising the at least one halobutyl rubber can be efficiently subjected to curing and that vulcanizates, i.e., cured rubber compositions, thereof can be produced, which in turn are suitable for use, e.g., for lightweight construction of suitable articles, especially as inner liners in tires. In this regard it has been surprisingly found that the amount of retarders, especially MBTS, can be reduced as much as possible or can even be completely avoided and that nonetheless, a sufficiently long, i.e., optimized, t₉₀ time is achieved and, as far as the vulcanizate is concerned, without, however, negatively affecting the mechanical properties of the vulcanizate, e.g., the tensile strength, and wherein further a sufficiently high M_{H} to M_{L} difference can be achieved.

In addition, it has been in particular surprisingly found that the rubber compositions according to the present invention and the vulcanizates obtainable therefrom further exhibit an excellent (low) air permeability, in particular compared to conventional filler containing rubber compositions comprising halobutyl rubbers.

Further, it has been in particular surprisingly found that the rubber compositions according to the present invention allow the amount of carbon black used as filler and being present therein to be significantly reduced, or even allow to completely avoid the use of any carbon blacks as fillers, which is advantageous in terms of sustainability. It has been found in this context that said reduction or avoidance in particular does not have any negative impact as far as curing time, particularly t₉₀ time, of the curable rubber composition and air permeability of the cured rubber composition are concerned, to the contrary.

Moreover, it has been in particular surprisingly found that the rubber compositions according to the present invention exhibit a significantly improved (i.e., optimized) t₉₀ curing time, and at the same time also lead to improved (increased) values of the M_{H} to M_{L} difference, in particular when compared to conventional carbon black containing rubber compositions comprising halobutyl rubbers. In this regard it has been surprisingly found that this difference in t₉₀ curing time is also apparent when comparing retarder-free curable rubber compositions according the present invention to retarder- and carbon black-containing rubber compositions.

Finally, it has been in particular surprisingly found that the use of at least one organosilane in the curable rubber composition further improves the t₉₀ value and thus the t₉₀ curing time of said compositions compared to curable rubber compositions which do not comprise such an organosilane.

### Detailed description of the invention

The term "comprising" as used in the present invention in connection with, for example, the curable rubber composition according to the invention preferably has the meaning "consisting of." In this context, for example, with regard to the curable rubber composition according to the invention, one or more of the further constituents optionally contained that are mentioned hereinafter may also be contained therein in addition to the constituents mandatorily present therein. All constituents may be present in each of their preferred embodiments mentioned hereinafter.

The amount of all constituents described herein, such as the constituents contained in the curable rubber compositions according to the invention (comprising in each case all the mandatory constituents and, moreover, all the optional constituents), add up in total to 100% by weight in each case.

The phr (parts per hundred parts of rubber by weight) specification used herein is the quantity specification commonly used in the rubber industry for rubber compositions. The dosage of the parts by weight of the individual constituents is always based on 100 parts by weight of the total mass of all rubbers present in the composition.

### Curable rubber composition

### Halobutyl rubber

The at least one halobutyl rubber is curable by means of at least one curing agent.

A person skilled is aware of halobutyl rubbers and methods for preparing such rubbers. Halobutyl rubbers are halogenated isobutene-isoprene rubbers. They are obtainable by halogenation, especially bromination and/or chlorination of butyl rubbers.

Butyl rubbers, in turn, are predominantly composed of isobutene units, the remaining part being isoprene units. Particularly preferably the proportion of isobutene units is 95 to 99.5 mol% and the proportion of the isoprene units is 0.5 to 5 mol%, more particularly preferably, the proportion of isobutene units is 97 to 99.2 mol% and the proportion of the isoprene units is 0.8 to 3 mol%, wherein the proportion of isobutene units and isoprene units preferably add up to 100 mol% of the monomers contained in and polymerized into the polymer. Butyl rubbers generally have low gas and moisture permeability.

Due to the isoprene units polymerized into them, the butyl rubbers have carbon-carbon double bonds, which serve both for vulcanization and for the modification with halogens such as, in particular, chlorine and bromine.

The halobutyl rubbers obtainable by modification with halogens (halogenation) have a higher reactivity than the butyl rubbers and thus a broader spectrum in terms of vulcanization possibilities, such as in particular the co-vulcanization possibilities with other rubbers such as polybutadiene, 3,4-polyisoprene, cis-1,4-polyisoprene, natural rubber (NR), epoxidized natural rubber, butyl rubber (IIR; isobutene isoprene rubber), styrene-isoprene rubber, styrene-butadiene rubber (SBR), and styrene-isoprene-butadiene rubber.

Preferably, the at least one halobutyl rubber is selected from the group consisting of chlorobutyl rubbers (CIIR; chloro-isobutene-isoprene rubber) and bromobutyl rubbers (BIIR; bromo-isobutene-isoprene rubber), and mixtures thereof.

Among the halobutyl rubbers, the bromobutyl rubbers are more reactive due to their weaker carbon-bromide bond, as compared to the chlorobutyl rubbers that have a carbon-chlorine bond, which opens an even broader spectrum of vulcanization systems for bromobutyl rubbers. Bromobutyl rubbers vulcanize more rapidly and usually have better adhesion to diene rubbers.

Among the halobutyl rubbers, bromobutyl rubbers are particularly preferred in the context of the present invention. Further preferably, bromobutyl rubbers are derived from isobutene and para-bromo methyl styrene, especially preferably comprising 40 to 60 mol-%, most preferably about 50 mol-%, of para-bromo methyl styrene, based on the total composition of the bromobutyl rubber. A commercial example of a suitable bromobutyl rubber is Exxpro^{™} 3563 by Exxon Mobil.

It is however also possible to use compounds of one or more bromobutyl rubbers with one or more chlorobutyl rubbers as the halobutyl rubber component.

Chlorobutyl rubbers (CIIR) suitable in the context of the present invention preferably contain between 1.1 and 1.3 wt.% of chlorine, and the bromobutyl rubbers (BIIR) preferably contain between 1.9 to 2.1 wt.% of bromine. This corresponds to a proportion of reactive positions of about 2 mol%.

The viscosities of the halobutyl rubbers are preferably between 35 and 55 Mooney units (ML (1 + 8), 125 °C). Just like butyl rubber, the products contain almost no secondary constituents (rubber proportion > 98.5). The halobutyl rubbers preferably contain stabilizers, in particular sterically hindered phenols as stabilizers.

The rubber composition according to the invention can contain, in addition to the halobutyl rubbers, one or more further rubbers that differ from the halobutyl rubbers. Particularly preferred as further rubbers that differ from the halobutyl rubbers are, if present, polybutadiene, 3,4-polyisoprene, cis-1,4-polyisoprene, natural rubber (NR), epoxided natural rubber, butyl rubber (IIR; isobutene isoprene rubber), styrene-isoprene rubber, styrene-butadiene rubber (SBR), and styrene-isoprene-butadiene rubber.

For example, the adhesion to other rubber-based tire components, in particular as compared to general-purpose rubbers, can thus be increased by admixture of natural rubber to halobutyl rubbers. By cross-linking the different rubbers, it is possible to create synergies with regard to tensile strength, so that it can lie even above the tensile strength of the individual rubbers. The gas and moisture permeability of the vulcanized end product typically increases with the admixture of natural rubber.

The admixture of styrene-butadiene rubbers to halobutyl rubbers can occur in the same way as the admixture of natural rubbers, but typically has no particular advantages over the latter, so that the use of natural rubbers, also with regard to the use of renewable resources, is usually preferred to that of the styrene-butadiene rubbers. As example, typical natural rubbers are available under the names SMR ("Standard Malaysian Rubber"), TSR ("Technically Specified Rubber") and RSS ("Ribbed Smoked Sheets").

The admixture of up to 30 phr, preferably up to at most 20 phr butyl rubber to halobutyl rubber has typically only minor to no effect on the gas and moisture permeability of the vulcanized end products, but it can decrease the vulcanization rate and increase the heat resistance, where this is desired.

The phr (parts per hundred parts of rubber by weight) specification used herein is the quantity specification commonly used in the rubber industry for rubber compositions. The dosage of the parts by weight of the individual constituents is always based on 100 parts by weight of the total mass of all rubbers present in the composition

The total amount of halobutyl rubber is 30 to 100 phr, preferably 40 to 100 phr, more preferably 50 to 100 phr, yet more preferably 60 to 100 phr, particularly preferably 65 or 70 to 100 phr, further preferably 75 or 80 to 100 phr, more particularly preferably 85 or 90 to 100 phr, like 95 to 100 phr, and most preferably 100 phr.

In the case that the rubber compound contains less than 100 phr halobutyl rubber, at least one other rubber is contained in the rubber composition, preferably one of the rubbers mentioned above, more particularly preferably natural rubber, so that the total amount of rubbers contained is 100 phr.

This means that the amount of other rubbers that differ from the halobutyl rubbers is from 0 to 40 phr, preferably from 0 to 35 phr, particularly preferably from 0 to 30 phr, further preferably from 0 to 20 or 25 phr and more particularly preferably from 0 to 10 or 15 phr, as example 0 to 5 phr or 0 phr.

### Curing agent

The at least one curing agent is suitable for curing the at least one halobutyl rubber and comprises at least one of sulfur, amines, phenolic resins, hydroquinones and peroxides. Most preferably, at least sulfur is present as curing agent.

A person skilled in the art is aware of suitable curing agents that can be used for curing halobutyl rubbers. The selection of the curing agent inter alia depends on the type of the desired application and/or the type of the halobutyl rubber used, e.g., with respect to whether it bears functional groups or not, what kind of functional groups, and the type of halogen atoms being present.

Amines suitable as curing agent include amine derivatives. Amines and amine derivatives are preferably diamines and/or diamine derivatives, more preferably organic diamines, and/or organic diamine derivatives, yet more preferably aliphatic and/or aromatic diamines and/or diamine derivatives, most preferably aliphatic diamines and/or diamine derivatives. Examples of suitable amines are diamines such as alkylene diamines such as C₁ to C₈ alkylene diamines. Specific examples are methylene diamine, hexamethylenediamine and hexamethylenediamine carbamate (HMDA), in which one amino group has been transferred into a carbamate group. Amines suitable as curing agent preferably do not include guanidines such as biguanidines.

Phenolic resin curing agents are preferably selected from alkylated phenolic resins such as alkylated phenol formaldehyde resins. Examples of alkylated phenol formaldehyde resins are octylphenol formaldehyde resins. Preferably, phenolic resin curing agents are used in combination with zinc oxide.

Examples of peroxide curing agents are organic peroxides such as dialkyl peroxides, alkyl aryl peroxides, diaryl peroxides, alkyl peracid esters, aryl peracid esters, diacyl peroxides, polyvalent peroxides, and mixtures thereof. Specific examples of organic peroxides are di-tert. butyl peroxide, 2,5-dimethyl-2,5-di(tert-butyl peroxy)hexane, dicumyl peroxide, tert-butylcumyl peroxide, tert-butyl peroxybenzoate, dibenzoyl peroxide, 1,1-di(tert-butyl peroxy)-3,3,5-trimethylcyclohexane and bis-(tert-butyl peroxy)-diisopropylbenzene and mixtures thereof.

Examples of hydroquinones are substituted or modified hydroquinones such as 2,5-diorgano-hydroquinones. Preferably, hydroquinones are selected from 2,5-ditertiaryalkyl-hydroquinones, most preferred is 2,5-ditertiaryamyl-hydroquinone.

Preferably, the at least one curing agent comprises at least sulfur. Preferably, elemental sulfur in the form of S₈ rings is used for curing by means of sulfur. The S₈ ring is either opened thermically or by alkaline substances. The sulfur may be present in the curable rubber composition as soluble or insoluble sulfur. Preferably, no sulfur donors are used as curing agent. In other words, sulfur donors are preferably not covered by the term "sulfur" and/or are not used as sulfur curing agent.

Preferably, the at least one curing agent is present in the composition in an amount in a range of from 0.05 to 30 phr, preferably of from 0.2 to 20 phr, more preferably of from 0.5 to 12 phr, even more preferably of from 0.9 to 8.0 phr, most preferably of from 1.0 or 1.5 to 7.5 or to 7.0 phr.

In addition to the at least one of sulfur, amines, phenolic resins, hydroquinones and peroxides, one or more further curing agents may be additionally present.

Examples of such additionally present curing agents include at least one metal oxide, preferably at least one divalent metal oxide, more preferably at least one divalent metal oxide selected from magnesium oxide, zinc oxide, lead oxide, and mixtures thereof, still more preferably at least one divalent metal oxide selected from magnesium oxide, zinc oxide, and mixtures thereof. Preferably, if the at least one metal oxide is separated from all other parts of the at least one curing agent, the rubber composition of the invention cannot be cured by the exclusive use of the at least one metal oxide as such.

### Optionally present retarder

The curable rubber composition may optionally comprise at least one organic constituent which is suitable to retard the t₉₀ curing time of the curable rubber composition, which is also simply referred to as "retarder" hereinafter and hereinbefore. The retarder is different from the at least one curing agent, the at least one halobutyl rubber, filler F1 and, if present, optional fillers F2 and F3, which are described further below.

However, the total amount of any organic constituents of the curable rubber composition, if present, which are suitable to retard the t₉₀ curing time, preferably in the sense of the definition of the term "retarder" according to DIN ISO 1382:2023-08, including 2,2'-dibenzothiazolyl disulfide, and which are different from both the at least one curing agent and the at least one lignin-based filler F1 and the at least one halobutyl rubber, is less than 1.85 phr. Further, the curable rubber composition comprises no or less than 0.45 phr 2,2'-dibenzothiazolyl disulfide (MBTS). Preferably, it comprises no 2,2'-dibenzothiazolyl disulfide (MBTS) at all.

Preferably, the t₉₀ curing time is, due to the optional presence of the at least one aforementioned retarder in a maximum amount of less than 1.85 phr, such that it is in a range of from 5 to 45 minutes, more preferably of from 5 to 30 minutes, even more preferably of from 5 to 20 minutes, especially preferably of from 5 to 15 minutes, preferably in each case at a temperature in a range of from 140 °C to 220 °C, more preferably of from 150 °C to 200 °C, even more preferably of form 155 °C to 180 °C including at 170 °C, and/or preferably when the sample utilized has a thickness, which preferably is a cone-shaped thickness, in a range of from 0.1 to 10 mm, more preferably of from 0.5 to 8 mm, preferably including an outer sample thickness of the cone-shaped sample thickness of about 6.8 mm and a center gap thickness of the. cone-shaped sample thickness of about 0.5 mm with an average sample thickness of about 2.7 mm across the whole sample area. The t₉₀ curing time is measured as described in the 'methods' section. If the amount of retarder is too high and ≥1.85 phr, then t₉₀ curing time can be too long and hence non-optimized.

Organic constituents, which are suitable to retard the t₉₀ curing time, may be selected from diamino-2,4,6-triazinyls, guanidines, biguanidines, and organic sulfur-containing constituents including sulfur donors, particularly from constituents which bear at least one S-N-bond. Such constituents are preferably selected from thiazoles, thioles, sulfenamides, thiurames, dithiocarbamates, xanthogenates, alkyl phenol disulfides, thioureas, alkoxy thiocarbamates, alkoxy thiocarbonates, dialkyl thiophosphonates, and mixtures thereof.

Preferably, organic constituents, which are suitable to retard the t₉₀ curing time, are selected from 2-mercaptobenzo thiazole, 2,2'-dibenzothiazolyl disulfide, N-tert-butyl-2-benzothiazole sulfenamide, zinc dialkyldithiophosphate, benzothiazole disulfide, zinc butyl xanthate, N-dicyclohexyl-2-benzothiazole sulfenamide, N-cyclohexyl-2-benzothiazole sulfenamide, thiram, tetrabenzyl thiuram disulfide, tetramethyl thiuram monosulfide, tetramethyl thiuram disulfide, poly-tert-amylphenol disulfide, zinc dithiocarbamate, zinc diethyl dithiocarbamate, 2-morpholinothiobenzo thiazole, N-oxydiethylene benzothiazole-2-sulfenamide, N,N-diphenyl thiourea, dithiocarbamyl sulfenamide, N,N-diisopropyl benzothiozole-2-sulfenamide, zinc-2-mercapto toluimidazole, dithio bis(N-methyl piperazine), dithio bis(N-beta-hydroxy ethyl piperazine), dithio bis(dibenzyl amine), OTBG (o-tolylbiguanidine), DOTG (di-o-tolylguanidin), DPG (diphenyl guanidine) and mixtures thereof.

The total amount of any organic constituents including 2,2'-dibenzothiazolyl disulfide (MBTS) of the curable rubber composition, which are suitable to retard the t₉₀ curing time, preferably in the sense of the definition of the term "retarder" according to DIN ISO 1382:2023-08, if present, is less than 1.85 phr, preferably less than 1.35 phr, more preferably less than 1.25 phr, even more preferably less than 1.00 phr, whereby the amount of 2,2'-dibenzothiazolyl disulfide is in each case less than 0.45 phr or particularly is 0 phr.

Preferably, the curable rubber composition does not comprise MBTS. More preferably, the curable rubber composition does not comprise any constituent, which is suitable to retard the curing time.

### Optionally present additional additive

Optionally, at least one additional additive is present in the composition, which is different from the at least one curing agent and any organic constituents suitable to retard the t₉₀ curing time. The proportion of said at least one additive in the curable rubber composition according to the invention preferably is 0 or 0.1 to 10 phr, more preferably is 0 or 0.5 to 8 phr, and most preferably is 0 or 1 to 5 phr.

Such additives include, for example, saturated fatty acids with preferably 12 to 24, more preferably 14 to 20 and most preferably 16 to 18 carbon atoms, such as stearic acid and the zinc salts of the aforementioned fatty acids. Fatty acids in particular may function as dispersing agents. Hence, preferably said at least one additive is a dispersing agent.

### Filler

The curable composition comprises at least one lignin-based filler F1.

### Lignin based filler F1

The at least one lignin-based filler F1 is different from carbon black and has an STSA surface area of up to 200 m²/g. The method for the determination of the STSA surface area (statistical thickness surface area) is disclosed in the 'methods' section hereinafter. The above at least one lignin-based filler F1 and its preferred embodiments, as described hereinafter, are also denoted as "at least one filler F1".

The terms filler and organic filler are known to a person skilled in the art. Preferably, the filler F1 employed according to the invention is a reinforcing filler, i.e., an active filler. Reinforcing or active fillers are characterized by a higher specific surface area than inactive fillers and, in contrast to inactive (non-reinforcing) fillers, they can change the viscoelastic properties of a rubber by interacting with the rubber within a rubber composition.

Preferably, the least one filler F1 has an STSA surface area in a range of from 2.5 to 200 m²/g, more preferably of from 5.0 to <200 m²/g, even more preferably of from 7.5 to 175 m²/g, still more preferably of from 10.0 to 150 m²/g.

Preferably, the least one filler F1 has an STSA surface area of >40.5 m²/g, more preferably of >42.0 m²/g, even more preferably of >45.0 m²/g.

Therefore, and especially more preferably, the least one filler F1 has an STSA surface area in a range of from >40.5 to 200 m²/g, especially even more preferably of from >42.0 to 175 m²/g and most preferably of from >45.0 to 150 m²/g.

Preferably, the least one filler F1 has a BET surface area of up to 200 m²/g. More preferably, the least one filler F1 has a BET surface area in a range of from 3.0 to 200 m²/g, more preferably of from 6.0 to <200 m²/g, even more preferably of from 8.0 to 175 m²/g, still more preferably of from 12.0 to 150 m²/g. The method for the determination of the BET surface area (specific total surface area according to Brunauer, Emmett and Teller) is disclosed in the 'methods' section hereinafter.

Preferably, the least one filler F1 has a d99 value of <25 µm, more preferably <20 µm, even more preferably <18 µm, still more preferably <15 µm, yet more preferably <10 µm. The method for the determination of the d99 value is described hereinbelow in the 'methods' section and is carried out by means of laser diffraction according to ISO 13320:2009.

Preferably, the least one filler F1 has a weight average molecular weight in a range of from 1000 to 4000 Da, more preferably of from 1300 to 3700 Da, even more preferably of from 1700 to 3200 Da, yet more preferably of from 2500 to 3000 Da, still more preferably of from 2600 to 2900 Da, most preferably of from 2650 to 2850 Da, in each case when determined based on the soluble fraction of the filler F1. The method for the determination of the weight average molecular weight is described hereinbelow in the 'methods' section.

Preferably, the least one filler F1 has a polydispersity index (PDI) in a range of from 1.5 to 5.0, more preferably of from 1.8 to 4.5, even more preferably of from 1.9 to 4.3, still more preferably of from 2.1 to 4.0, yet more preferably of from 2.4 to 3.5, most preferably of from 2.6 to 3.2, when determined based on the soluble fraction of the lignin-based filler. The polydispersity index can be determined by the same method used for determining the weight average molecular weight. The PDI is calculated as the weight average molecular weight divided by the number average molecular weight.

Preferably, the at least one filler F1 has an ash content in a range of from 0.1 to 3.0 wt.-%, more preferably of from 0.1 to 2.5 wt.-%, even more preferably of from 0.2 to 2.0 wt.-%, still more preferably of from 0.3 to 1.5 wt.-%, yet more preferably of from 0.4 to 1.0 wt.-%.

Preferably, the at least one filler F1 has a solubility in 0.1 M NaOH in a range of from 1 to 40 wt.-%, more preferably of from 3 to 35 wt.-%, even more preferably of from 5 to 30 wt.-%. The method for the determination of the solubility is disclosed in the 'methods' section hereinafter.

Preferably, the at least one filler F1 has a density of at most 1.50 g/cm³. More preferably, the at least one filler F1 has a density of 1.00 to 1.50 g/cm³, even more preferably of 1.15 to 1.35 g/cm³, still more preferably of 1.10 to1.40 g/cm³. The method for the determination of the density is disclosed in the 'methods' section hereinafter.

Preferably, the least one filler F1 has a carbon content in a range from >60% by weight to <90% by weight, more preferably from >60% by weight to <85% by weight, even more preferably from >60% by weight to ≤80% by weight. The method for the determination of the carbon content is disclosed in the 'methods' section hereinafter.

Preferably, the at least one filler F1 has an oxygen content in a range from >8% by weight to <30% by weight, more preferably from >10% by weight to <30% by weight, even more preferably from >15% by weight to <30% by weight, relative to the ash-free and water-free filler, respectively. The oxygen content can be determined by high-temperature pyrolysis, for example using the EuroEA3000 CHNS-O Analyzer of the company EuroVector S.p.A.

Preferably, the at least one filler F1 has at least one kind of functional groups that is selected from phenolic OH groups, phenolate groups, aliphatic OH groups, carboxylic acid groups, carboxylate groups and mixtures thereof.

Preferably, the at least one filler F1 has a pH value in a range from 6 to 10, more preferably in a range of from 6 to 9, even more preferably in a range from 7 to 9, still more preferably in a range from 7 to <9.

The term "lignin-based" in the sense of the present invention preferably means that one or more lignin moieties and/or one or more lignin scaffolds are present in the filler F1. Lignins are solid biopolymers that are incorporated into plant cell walls and thus effect the lignification of plant cells. As such, they are present in biomass and in particular in biologically renewable raw materials, and they therefore represent - in particular in hydrothermally treated form - an environmentally friendly filler alternative compared to fillers such as carbon blacks that are obtainable from fossil materials.

The term "lignin-based filler" in the sense of the present invention preferably means that that the filler F1 is present in a form that is obtainable by means of hydrothermal treatment of at least one kind of lignin-containing biomass such as at least one kind of lignin-containing phytomass, wherein the hydrothermal treatment preferably has been carried out at a temperature in a range from >100 °C to <300 °C, more preferably from >150 °C to <250 °C.

Suitable processes for hydrothermal treatment, in particular of lignins, are, e.g., described in WO 2017/085278 A1 and WO 2017/194346 A1 as well as in EP 3 470 457 A1. Hydrothermal treatment in the sense of the present invention preferably means a hydrothermal carbonization (HTC), which in turn may also be referred to as "aqueous carbonization at elevated temperature and pressure". Hydrothermal treatment preferably refers to a hydrothermal carbonization treatment of a lignin-containing material, which is a thermochemical conversion process of the lignin-containing material in an aqueous suspension. The lignin-containing material preferably is selected from a group consisting of kraft lignin, steam explosion lignin, biorefinery lignin, supercritical separation lignin, hydrolysis lignin, flash precipitated lignin, biomass originating lignin, lignin from alkaline pulping process, lignin from soda process, lignin from organosolv pulping, lignin from alkali process, lignin from enzymatic hydrolysis process, and any combination thereof. Preferably, the lignin is wood based lignin, which can originate from softwood and/or hardwood, and/or originates from annual plants.

"Kraft lignin" is to be understood to be originated from kraft black liquor, which is an alkaline aqueous solution of lignin residues, hemicellulose, and inorganic chemicals used in a kraft pulping process. The black liquor from the pulping process comprises components originating from different softwood and hardwood species in various proportions. Lignin can be separated from the black liquor by different techniques including precipitation and filtration. The precipitated lignin can be purified from inorganic impurities, hemicellulose and wood extractives using acidic washing steps. Further purification can be achieved by filtration. "Flash precipitated lignin" is to be understood as lignin that has been precipitated from black liquor in a continuous process by decreasing the pH of a black liquor flow, under the influence of an over pressure of 200 to 1000 kPa, down to the precipitation level of lignin using a carbon dioxide based acidifying agent, preferably carbon dioxide, and by suddenly releasing the pressure for precipitating lignin. The lignin may be derived from an alkali process. The "alkali process" can begin with liquidizing biomass with strong alkali followed by a neutralization process. After the alkali treatment, the lignin can be precipitated in a similar manner as presented above. The lignin may be derived from steam explosion. Steam explosion is a pulping and extraction technique that can be applied to wood and other fibrous organic material. "Biorefinery lignin" is to be understood to mean lignin that can be recovered from a refining facility or process where biomass is converted into fuel, chemicals, and other materials. "Supercritical separation lignin" is to be understood that lignin that can be recovered from biomass using supercritical fluid separation or extraction technique. The lignin may be derived from a "hydrolysis process". The lignin derived from the hydrolysis process can be recovered from paper-pulp or wood-chemical processes. The lignin may originate from an "organosolv process". Organosolv is a pulping technique that uses an organic solvent to solubilize lignin and hemicellulose. "Enzymatic hydrolysis processes" are to be understood to comprise enzymatic hydrolysis of a plant-based feedstock, such as a wood-based feedstock such as enzymatic hydrolysis of cellulose. Enzymatic hydrolysis is a process, wherein enzyme(s) assist(s) in cleaving bonds in molecules with the addition of elements of water.

The lignin-containing material may be dissolved in alkaline solution first, prior to the hydrothermal treatment, such as NaOH. The dissolution may be accomplished by heating the mixture of lignin and alkaline solution to about 80 °C, adjusting the pH to a value above 7, such as 9 - 11, and mixing the mixture of lignin and alkaline solution for a predetermined time. The mixing time may be continued for about 2 to 3 hours. The dissolved lignin material may then be subjected to a hydrothermal treatment such as a hydrothermal carbonization treatment. The hydrothermal carbonization treatment may take place in a reactor or if needed in several parallel reactors, working in a batchwise manner. The dissolved lignin material may be preheated before being entered in the reactor(s). The temperature in the reactor(s) may be 150 to 300 °C or to 250 °C and the pressure may be 20 to 30 bar. The residence time in the reactor(s) may be about three to six hours. In the reactor, the lignin is carbonized, whereby a stabilized lignin derivative with a high specific surface area may be precipitated. The formed slurry comprising the carbonized lignin may then be removed and cooled. Consequently, a slurry comprising lignin-based filler F1 is formed. The slurry comprising lignin-based filler F1 may be fed to a separation unit such as a filter press, wherein the precipitated lignin-based filler F1 may be separated from the slurry, e.g., in form of a filter cake. The separated lignin-based filler F1, which may be present in form of a filter cake, may be crushed and dried. Before crushing or drying, the lignin-based filler F1 may be, if needed, washed. The crushed lignin particles may be dried and used as such as the lignin-based filler. However, preferably after drying, the lignin particles obtained are subsequently subjected to a milling step in order to obtain lignin particles with smaller particle sizes.

Optionally, the starting material used for the hydrothermal treatment, i.e., the lignin-containing material, can be reacted with at least one crosslinker before the hydrothermal treatment is carried out. The crosslinker preferably has at least one functional group which can react with the crosslinkable groups of the lignin. Preferably, the crosslinker has at least one functional group selected from aldehyde, carboxylic acid anhydride, epoxide, hydroxyl and isocyanate groups or a combination thereof. Preferably, the crosslinker is selected from aldehydes, epoxides, acid anhydrides, polyisocyanates and/or polyols, in particular from aldehydes such as formaldehyde, furfural and/or sugar aldehydes. The crosslinker can react with free ortho and para positions of the phenolic rings, with aromatic and aliphatic OH groups, and/or with carboxyl groups of the lignin.

Biomass as defined herein is any biomass, wherein the term "biomass" herein includes phytomass, i.e., biomass originating from plants, zoomass, i.e., biomass originating from animals, and microbial biomass, i.e., biomass originating from microorganisms including fungi. The biomass particularly preferred herein for the production of the fillers is phytomass, preferably dead phytomass.

Preferably, the at least one filler F1 has a ¹⁴C content in a range from 0.20 to 0.45 Bq/g of carbon, more preferably of from 0.23 to 0.42 Bq/g of carbon. The required ¹⁴C content cited above is achieved by organic fillers obtainable from biomass. Thus, fillers obtained from fossil materials, such as fossil fuels in particular, do not have a corresponding ¹⁴C content. For example, a carbon black filler obtainable from fossil materials does not have a corresponding ¹⁴C content.

Preferably, the least one filler F1 is present in the composition in an amount in a range of from 0.25 to 150 phr, more preferably of from 0.75 to 125 phr, even more preferably of from 1.00 to 100 phr, still more preferably of from 1.50 to 85 phr, yet more preferably of from 1.75 to 70 phr, most preferably of from 2.0 to 60 phr.

Preferably, the least one filler F1 is present in the composition in an amount that exceeds the amount of any further fillers including optional fillers F2 and F3 being also optionally present therein, which are different from the at least one filler F1. Preferably, however, no other filler than the at least one filler F1 is present in the curable rubber composition.

### Optional filler F2

The composition may further contain at least one further filler F2, which is different from filler F1 and is, if present, at least one organic filler. Examples of organic fillers different from filler F1 are carbon blacks and other organic fillers, which are different from lignin-based filler F1, but which are also obtainable from biomass and/or renewable and/or recycled raw materials, for example by means of hydrothermal treatment or pyrolysis. Preferably, the filler F2 is a carbon black. Further examples of the at least one further filler F2 are graphites including expanded graphites, and/or graphenes and/or carbon nanotube materials including single-wall and multi-wall nanotubes.

The carbon black to be used as optionally present filler F2 can be a carbon black obtainable from biomass and/or renewable and/or recycled raw materials, but may also be an industrial carbon black obtainable from fossil materials such as particular a furnace carbon black, as classified as general-purpose carbon blacks under ASTM Code N772, under ASTM Code N660 or under ASTM Code N550.

A person skilled in the art is aware that carbon blacks have a high carbon content of at least 95 wt.-%, based on the total weight of the filler. Hence, any optionally present carbon black filler preferably has a higher carbon content than filler F1.

Preferably, the least one optionally present filler F2 has an STSA surface area of up to 200 m²/g, more preferably in a range of from 2.5 to 200 m²/g, even more preferably of from 5.0 to <200 m²/g, yet more preferably of from 7.5 to 175 m²/g, still more preferably of from 10.0 to 150 m²/g.

Preferably, the least one optionally present filler F2 is present in the composition in an amount in a range of from 0 or 0.25 to 150 phr, more preferably of from 0 or 0.75 to 125 phr, still more preferably of from 0 or 1.00 to 100 phr, even more preferably of from 0 or 1.50 to 85 phr, yet more preferably of from 0 or 1.75 to 70 phr, most preferably of from 0 or 2.0 to 60 phr or to 50 phr or to 40 phr or to 30 phr.

### Optional filler F3

The composition may further comprise at least one filler F3, which is different from filler F1 and is an inorganic filler. Examples of inorganic fillers are phyllosilicates such as clay minerals, for example talc, carbonates such as calcium carbonate, silicates such as for example calcium, magnesium, and aluminum silicates, and oxides such as for example magnesium oxide, silica including, e.g., rice husk silica, and/or silicic acid.

Preferably, the optional at least one inorganic filler F3 is a silicate and more preferably is an aluminum silicate or zeolite. Examples of aluminum silicates are andalusite, kyanite, sillimanite, metakaolinite, mullite, halloysite, pyrophillite, donbassite and kaolin (also known as kaolinite), whereby the at least one filler F3 most preferably is kaolin.

The optional at least one inorganic filler F3 increases the processibility of cured vulcanizates, i.e., the cured rubber composition, and improves (reduces) the air permeability of resulting vulcanizates.

Preferably, the curable rubber composition comprises the at least one filler F3 in an amount preferably in a range of from 0 or 1.0 to 120 phr, more preferably of from 0 or 5.0 to 100 phr, even more preferably of from 0 or 10 to 85 phr, yet more preferably of from 0 or15 to 70 phr, still more preferably of from 0 or 20 to 60 phr, most preferably of from 0 or 25 to 55 phr.

### Further optional constituents

Optionally, the curable rubber composition comprises at least one organosilane, more preferably at least one organosilane selected from organosilanes comprising at least one hydrolysable group and at least one non-hydrolysable group, even more preferably from organosilanes comprising at least one hydrolysable group and comprising at least one sulfur-containing non-hydrolysable group. Examples are 4-mercaptobutyltrialkoxysilane and/or 6-mercaptohexyltrialkoxysilane and/or 3-mercaptopropyltrialkoxysilane, wherein alkoxy groups more preferably mean, independently from one another, methoxy or ethoxy groups. Further examples are bis(dimethylethoxysilylpropyl)tetrasulfide (DMESPT), bis(dimethylethoxysilylpropyl)-disulfide (DMESPD), 3-mercaptopropyltriethoxysilane, 3-thiocyanato-propyltrimethoxysilane, 3-octanoylthiopropyltriethoxysilane, bis(triethoxysilylpropyl)-polysulfides, especially comprising 2 to 8 sulfur atoms such as bis(triethoxysilylpropyl)tetrasulfide (TESPT) and bis(triethoxysilylpropyl)disulfide (TESPD) and mixtures thereof, whereby TESPD is preferred.

Preferably, the at least one organosilane is present in the curable rubber composition in an amount in a range of from 0 or 0.05 to 40 phr, more preferably of from 0 or 0.20 to 30 phr, even more preferably of from 0 or 0.40 to 20 phr, yet more preferably of from 0 or 0.80 to 15 phr, especially more preferably of from 0 or 1.30 to 12 phr, most preferably of from 0r 1.80 to 10 phr.

The rubber composition may contain further optional constituents, such as plasticizers/softening agents and/or adhesion-enhancers and/or antidegradants and/or antiozonants and/or light stabilizing additives and/or pigments and/or processing aid additives and/or process oils.

By employing softening agents, it is possible to influence properties of the curable rubber composition, such as processability, in particular, but also properties of the cured rubber composition, such as its flexibility, especially at low temperatures. Particularly suitable softening agents in the context of the present invention are mineral oils from the group of paraffinic oils (substantially saturated chain-shaped hydrocarbons) and naphthenic oils (substantially saturated ring-shaped hydrocarbons). It is also possible to employ aromatic hydrocarbon oils. Other possible softening agents are for example esters of aliphatic dicarboxylic acids, such as for example adipic acid or sebacic acid, paraffin waxes and polyethylene waxes.

Preferably, softening agents, and among them particularly preferred the paraffinic and/or naphthenic and in particular aromatic process oils, are employed in a quantity of 0 or 1 to 20 phr, more preferably of 0 or 2 to 15 phr, even more preferably of 0 or 5 to 12 phr.

So-called adhesion-enhancers can be used to improve the adhesion of the vulcanized rubber compound of the present invention to other adjacent tire components. If adhesion-enhancers are used at all, then preferably they are selected from the group consisting of resins, more preferably of resins based on aliphatic hydrocarbon resins.

Preferably, the amount of adhesion-enhancers in the curable rubber composition is 0 to 15 phr or 1 to 15 phr, more preferably 0 or 2 to 10 phr and even more preferably 0 or 3 to 8 phr.

### Kit-of-parts

A further subject-matter of the present invention is a kit-of-parts comprising, in spatially separated form,
as part A) at least part of the rubber composition according to the present invention, wherein part A) does, however, not comprise the at least one curing agent, which is suitable for curing the at least one halobutyl rubber and which comprises at least one of sulfur, amines, phenolic resins, hydroquinones and peroxides,
optionally as part B) the remaining part of the rubber composition according to the present invention not being present in part A), wherein part B) does, however, not comprise the at least one curing agent, which is suitable for curing the at least one halobutyl rubber and which comprises at least one of sulfur, amines, phenolic resins, hydroquinones and peroxides, and
as part C) the at least one curing agent, which is suitable for curing the at least one halobutyl rubber and which comprises at least one of sulfur, amines, phenolic resins, hydroquinones and peroxides as defined as constituent in connection with the curable rubber composition according to the present invention.

Preferably, part A) does not comprise the at least one curing agent or more preferably comprises at most only parts of any curing agent which are not able to cure the rubber composition when present in part of part A). The same applies to optionally present part B). Parts of any curing agent not being able to cure the rubber composition being part of part A) or optionally present part B) may comprise metal oxides, including zinc oxide, and preferably consists of metal oxides, more preferably zinc oxide. More preferably, if part A) comprises parts of such a curing agent, which is not able to cure the rubber composition, part A) also comprises at least a part of filler F1.

Preferably part A) is not yet curable as such, and thus at this point of time preferably represents a rubber composition that is not yet curable by means of the at least one curing agent. The same applies to optionally present part B). The curing is only possible after mixing the parts A) and optionally B) with C).

Preferably, rubber(s) and filler(s) of the rubber composition and optionally part(s) of the curing agent(s) which are not able to cure said rubber composition on their own on the one hand and the at least one curing agent or the remaining parts of the at least one curing agent on the other hand are spatially separated from each other in the kit of parts and can thus be stored. The kit of parts serves for the preparation of a curable rubber composition. Thus, for example, the rubber composition constituting the one part of the kit of parts comprising rubber(s) and filler(s) and optionally other constituents, including, e.g., at least one fatty acid such as stearic acid or a metal oxide, can be employed as part A) in a first stage for preparing the curable rubber composition, and the second part of the kit of parts, namely part C), comprising the at least one curing agent or its remaining parts, can be employed in a second stage of said process.

For example, it is possible that part A) comprises the complete rubber composition according to the present invention except of the curing agent. In this case, part B) is not needed. It is also possible that part A) comprises only part of the rubber composition according to the present invention except of the curing agent, e.g., only part of filler F1 and/or only part of the at least one halobutyl rubber. Another rubber different from halobutyl rubber and/or the remaining part of the halobutyl rubber not present in part A) and/or another filler F2 and/or F3 being different from filler F1 and/or the remaining part of filler F1 and/or optionally further constituents can then be used as part B).

All preferred embodiments described hereinabove in connection with the curable rubber composition according to the invention are also preferred embodiments with regard to the kit of parts according to the invention.

### Cured rubber composition

A further subject-matter of the present invention is a cured rubber composition, which is obtainable by curing the curable rubber composition according to the present invention, or by curing a curable rubber composition obtainable by combining and mixing parts A), optionally B) and C) of the kit of parts according to the present invention.

All preferred embodiments described hereinabove in connection with the curable rubber composition and the kit-of-parts according to the invention are also preferred embodiments with regard to the cured rubber composition according to the invention. The preparation of the cured rubber composition according to the invention is carried out preferably in two stages, i.e., stages 1 and 2. Said stages can further be specified regarding in which step the at least one curing agent or a fraction therefrom is added, i.e., stages 1a and 2a of a first variant V1 and stages 1b and 2b of a second variant V2.

In the first stage of the first variant (V1, stage 1a), a rubber composition as a base mixture (masterbatch) is prepared first, by mixing all constituents employed for the preparation of the rubber composition according to the invention with each other, but at least without the at least one curing agent. In the second stage (stage 2a), the at least one curing agent, and optionally additional constituents such as optionally present retarder(s), are admixed to the rubber composition obtained after stage 1a.

In the first stage of the second variant (V2, stage 1b), the base mixture of the rubber composition is prepared in the same manner as in the first stage of the first variant (stage 1a) with the exception that a part of the at least one curing agent is already added into the base mixture. In the second stage (2b), the remainder of the at least one curing agent and optionally additional constituents such as optionally present retarder(s), are admixed to the rubber composition obtained after stage 1b. Preferably, the part of the at least one curing agent added in stage 1a is not able to cure the base mixture on its own.

Alternatively, the preparation of the cured rubber composition according to the invention is carried out preferably in one mixing stage only, wherein all parts of the rubber composition including the curing agent are mixed with each other. For example, said stage can be performed for example in that at first the at least one halobutyl rubber is added into a suitable mixing chamber and mixed, followed by addition of only part of the remaining constituents of the composition such as only 50 wt.-% of all remaining constituents including the curing agent, and by then, after mixing, adding the remaining part of all constituents followed by further mixing.

Before curing, the curable rubber compositions thus prepared may go through processes that are preferably customized or tailored for the final articles. The rubber compositions may be formed into a suitable shape as required for the curing process, preferably by extrusion, coextrusion, compression molding, transfer molding, injection molding, calendering, extrusion coating, laminating, or a combination thereof, e.g., by co-extrusion of at least two rubbers or by using a combination of extrusion and calendering. Curing may be carried out in vulcanization molds by means of pressure and temperature, or the curing is carried out without pressure in temperature-controlled channels in which air or liquid materials provide heat transfer, or the curing is performed in an autoclave.

Preferably, the t₉₀ value to obtain the cured rubber compositions from the curable rubber compositions is in a range of from 3 to 80 min, more preferably in a range of from 4 to 60 min, even more preferably in a range of from 5 to 50 min in particular preferably in a range of from 5 to 45 min, yet more preferably in a range of from 5 to 30 or 5 to 20 min or 5 to 15 min, especially preferably in a range of from 7 to 15 min or 9 to 15 min, preferably in each case at a temperature in a range of from 140 °C to 220 °C, more preferably of from 150 °C to 200 °C, even more preferably of form 155 °C to 180 °C including at 170 °C, and/or preferably when the sample utilized has a thickness, which preferably is a cone-shaped thickness, in a range of from 0.1 to 10 mm, more preferably of from 0.5 to 8 mm, preferably including an outer sample thickness of the cone-shaped sample thickness of about 6.8 mm and a center gap thickness of the cone-shaped sample thickness of about 0.5 mm with an average sample thickness of about 2.7 mm across the whole sample area. The t₉₀ value means the time period in which the torque, starting from the time of the minimum torque M_{L}, reaches 90% of the maximum torque M_{H} following ASTM D5289-19a.

Preferably, the cured rubber composition has an air permeability in a range of less than 4.10·10⁻¹⁷ m²/(Pa·s), preferably less than 4.00·10⁻¹⁷ m²/(Pa·s), more preferably less than 3.85·10⁻¹⁷ m²/(Pa·s), even more preferably less than 3.70·10⁻¹⁷ m²/(Pa·s), yet more preferably less than 3.55·10⁻¹⁷ m²/(Pa·s), still more preferably less than 3.50·10⁻¹⁷ m²/(Pa·s), particularly more preferably less than 3.45·10⁻¹⁷ m²/(Pa·s), most preferably less than 3.40·10⁻¹⁷ m²/(Pa·s).

### Uses of curable and cured composition and of kit-of-parts

A further subject-matter of the present invention is a use of the curable rubber composition, of the kit-of-parts, or of the cured rubber composition each according to the present invention, for manufacturing articles, parts and/or components, which preferably are suitable for use in the automotive and/or aerospace and/or engineering industry and/or pharmaceutical industry and/or consumer goods industry, which more preferably are suitable for the manufacture of rubber items requiring gas impermeability, especially hoses, personal protection equipment, protective clothing, pharmaceutical closures, vacuum seals and membranes, tank linings, conveyor belts, consumer products, in particular ball bladders, and tires, in particular as being used as or as at least part of inner liners of tires, even more preferably are suitable for the manufacture of air tires.

All preferred embodiments described hereinabove in connection with the curable rubber composition, the kit-of-parts and the cured rubber composition are also preferred embodiments with regard to the use of the curable rubber composition, of the kit-of-parts, or of the cured rubber composition according to the invention.

### Article, part, and/or component

A further subject-matter of the present invention is an article, part and/or component, which is in each case obtainable from the curable rubber composition, or from the kit-of-parts, or from the cured rubber composition each according to the present invention, and which is suitable for use in the automotive and/or aerospace and/or engineering industry and/or pharmaceutical industry and/or consumer goods industry, which preferably is suitable for use in rubber items requiring gas impermeability, especially hoses, personal protection equipment, protective clothing, pharmaceutical closures, vacuum seals and membranes, tank linings, conveyor belts, consumer products, in particular ball bladders, and tires, in particular as being used as or as at least part of inner liners of tires, more preferably is suitable for use in air tires.

All preferred embodiments described hereinabove in connection with the curable rubber composition, the kit-of-parts, the cured rubber composition, and the use of the curable rubber composition, of the kit-of-parts, or of the cured rubber composition according to the invention are also preferred embodiments with regard to the article, part and/or component obtainable from the curable rubber composition, from the kit-of-parts, or from the cured rubber composition according to the invention.

### Process for preparing the article, part, and/or component

A further subject-matter of the present invention is a process for preparing the article, part and/or component according to the present invention, wherein said process comprises at least one step, according to which the curable rubber composition according to the invention is shaped into the article, part and/or component, preferably before curing has been performed, by at least one of injection molding, compression molding, transfer molding, extrusion, coextrusion, e.g., by coextrusion of at least two rubbers, extrusion coating, laminating, calendaring, or a combination thereof, e.g., a combination of extrusion or coextrusion and calendaring.

All preferred embodiments described hereinabove in connection with the curable rubber composition, the kit-of-parts, the cured rubber composition, the use of the curable rubber composition, of the kit-of-parts, or of the cured rubber composition and the article, part and/or component obtainable from the curable rubber composition, from the kit-of-parts, or from the cured rubber composition according to the invention are also preferred embodiments with regard to the process for preparing the article, part and/or component according to the invention.

### METHODS

### 1. STSA and BET surface area

The STSA and BET surface area was each determined according to standard ASTM D6556-21.

### 2. Carbon content

The carbon content was determined by elemental analysis according to DIN 51732: 2014-07.

### 3. Particle size distribution

The particle size distribution was determined by laser diffraction of the material to be investigated dispersed in water (1% by weight in water) according to ISO 13320:2020. The volume fraction is specified, for example, as d99 in µm (the diameter of the grains of 99% of the volume of the sample is below this value). The values d90 and d25 (in µm) can be determined in the same way.

### 4. ¹⁴C content

The determination of the ¹⁴C content (content of biologically based carbon) was carried out by means of the radiocarbon method according to DIN EN 16640:2017-08.

### 5. Ash content

The ash content was determined according to the standard DIN 51719:1997-07.

### 6. Density

The density was determined according to ASTM D297-15 (2019).

### 7. Solubility in NaOH (aq.)

The solubility was measured in the following manner: First, a sample was dried at a temperature of 60 °C for four hours. A sample mass of 0.5 g was weighed and suspended in 50 ml of 0.1 M NaOH at a concentration of 1 % having a temperature of 22 °C. Mixing was continued for 1 hour, then the sample was placed on a glass microfiber paper (1.6 µm) and the filter paper with the sample was dried at a temperature of 60 °C for 2 hours. The portion of the sample, which has dissolved, could then be determined gravimetrically.

### 8. Average molecular weight

The weight average molecular weight was determined with size exclusion chromatography (SEC) by using 0.1 M NaOH as eluent and a sample amount of about 1 mg/ml, which was dissolved in 0.1 M NaOH. The weight average molecular weights were measured against polystyrene sulfonate standards. UV detector at a wavelength of 280 nm was used. Number average molecular weights as well as polydispersity index were determined also by this method.

### 9. Shore A hardness

Shore A hardness was tested according to ASTM D2240-15 (2021).

### 10. Tensile properties

Tensile properties (tensile strength and elongation at break) were determined following ASTM D412-16 (2021).

### 11. Curing characteristics and t₉₀ curing time

Moving die rheometer (MDR) was used to assess the cure characteristics of samples each having a cone-shaped thickness to ensure that the strain is equal along the radius, wherein the outer sample thickness is about 6.8 mm and the center gap thickness is about 0.5 mm, with an average sample thickness of about 2.7 mm across the whole sample area. Testing was conducted at 170 °C for 30 mins, following ASTM D5289-19a. Minimum and maximum torque (M_{L}, M_{H}) were measured. Further, the time period was determined in which the torque, starting from the time of the minimum torque M_{L}, reaches 90% of the maximum torque M_{H}, respectively. The time period is designated as t₉₀.

### 12. Air permeability

The air permeability of cured rubber composition was determined according to ISO 15105:2007-10. The measurements were carried out at 70 °C. Air permeability indicated the mean value of three measurements. Between curing and testing, the samples were stored for at least 16 h at room temperature (23 °C).

### EXAMPLES

The following examples further illustrate the invention, but are not to be construed as limiting its scope.

### 1. Preparation of curable compositions and their cured counterparts

### 1.1 Examples E1 to E7 (inventive) as well as C1 to C6 (comparative)

Curable rubber compositions E1 to E7 (inventive) and C1 to C6 (comparative) have been prepared in two steps, whereby the type and amount of each constituent comprised therein is shown in the following Tables 1 and 2. After both steps had been carried out, each curable composition obtained comprised a bromo butyl rubber (X_Butyl^{®} BB 2030), a processing oil, stearic acid, magnesium oxide, and zinc oxide (except of E7), as well as sulfur (Struktol^{®} SU 95) as curing agent. The comparative examples further comprised at least a carbon black filler (CB, classified under ASTM Code N-660) and/or a retarder (MBTS-80 GE; comprising 2,2'-dibenzothiazolyl disulfide), whereas the inventive examples comprised a lignin-based filler 1 (UPM BioMotion^{®} X10), 2 (UPM BioMotion^{®} X20), or 3 (UPM BioMotion^{®} X40) without or in addition to CB, but in each case no retarder. Lignin-based filler 1 has an STSA surface area of about 11 m²/g, lignin-based filler 2 has an STSA surface area of about 23 m²/g, and lignin-based filler 3 has an STSA surface area of about 40 m²/g.

### 1.2 Examples E8 to E12 (inventive) as well as C7 and C8 (comparative)

Examples E8 to E12 (inventive) and C7 and C8 (comparative) have been prepared in two steps with the same constituents as described for the examples E1 to E7 and C1 to C6, with the exception that zinc oxide was added in the second step of each example and a sulfur containing organosilane (Si 266^{®}, bis(triethoxysilylpropyl)disulfide) had been added to each of inventive examples E8 to E12 and comparative example C8. The inventive examples E8 to E12 each comprised one of the lignin-based fillers 1, 2 or 3, whereas the comparative example C7 and C8 comprised CB as described hereinbefore. The respective amounts of each constituent comprised in examples E8 to E12 and C7 and C8 are indicated in Table 3.

**Table 1 - Examples E1 to E4 and comparative examples C1 to C5**

| *Constituents* | *Examples [amounts in phr]* | | | | | | | | |
|---|---|---|---|---|---|---|---|---|---|
| | *C1* | *C2* | *C3* | *C4* | *C5* | *E1* | *E2* | *E3* | *E4* |
| *1^{st} step* | | | | | | | | | |
| X_Butyl^{®} BB 2030 | 100 | 100 | 100 | 100 | 100 | 100 | 100 | 100 | 100 |
| CB | 60 | 60 | - | - | - | - | - | - | - |
| Lignin-based filler 1 | - | - | 60 | - | - | 60 | - | - | 100 |
| Lignin-based filler 2 | - | - | - | 60 | - | - | 60 | - | - |
| Lignin-based filler 3 | - | - | - | - | 60 | - | - | 60 | - |
| Processing oil | 12 | 12 | 12 | 12 | 12 | 12 | 12 | 12 | 12 |
| Stearic acid | 2.0 | 2.0 | 2.0 | 2.0 | 2.0 | 2.0 | 2.0 | 2.0 | 2.0 |
| MgO | 0.15 | 0.15 | 0.15 | 0.15 | 0.15 | 0.15 | 0.15 | 0.15 | 0.15 |
| Zinc oxide | 3.0 | 3.0 | 3.0 | 3.0 | 3.0 | 3.0 | 3.0 | 3.0 | 3.0 |

| *2^{nd} step* | | | | | | | | | |
|---|---|---|---|---|---|---|---|---|---|
| Struktol^{®} SU 95 | 0.5 | 0.5 | 0.5 | 0.5 | 0.5 | 0.5 | 0.5 | 0.5 | 0.5 |
| MBTS-80 GE | - | 1.9 | 1.9 | 1.9 | 1.9 | - | - | - | - |

**Table 2 - Examples E5 to E7 and comparative examples C6**

| *Constituents* | *Examples [amounts in phr]* | | | |
|---|---|---|---|---|
| | *C6* | *E5* | *E6* | *E7* |
| *1^{st}step* | | | | |
| X_Butyl^{®} BB 2030 | 100 | 100 | 100 | 100 |
| CB | 60 | 60 | 40 | - |
| Lignin-based filler 1 | 40 | 40 | 60 | - |
| Lignin-based filler 3 | - | - | - | 60 |
| Processing oil | 12 | 12 | 12 | 12 |
| Stearic acid | 2.0 | 2.0 | 2.0 | 2.0 |
| MgO | 0.15 | 0.15 | 0.15 | 0.15 |
| Zinc oxide | 3.0 | 3.0 | 3.0 | - |
| *2^{nd} step* | | | | |
| Struktol^{®} SU 95 | 0.5 | 0.5 | 0.5 | 0.5 |
| MBTS-80 GE | 1.9 | - | - | - |

**Table 3 - Examples E8 to E12 and comparative examples C7 and C8**

| *Constituents* | *Examples [amounts in phr]* | | | | | | |
|---|---|---|---|---|---|---|---|
| | *C7* | *C8* | *E8* | *E9* | *E10* | *E11* | *E12* |
| *1^{st} step* | | | | | | | |
| X_Butyl^{®} BB 2030 | 100 | 100 | 100 | 100 | 100 | 100 | 100 |
| CB | 60 | 60 | - | - | - | - | - |
| Lignin-based filler 1 | - | - | - | - | - | - | 60 |
| Lignin-based filler 2 | - | - | - | - | - | 60 | - |
| Lignin-based filler 3 | - | - | 60 | 60 | 60 | - | - |
| Processing oil | 12 | 12 | 12 | 12 | 12 | 12 | 12 |
| Si 266^{®} | - | 4.3 | 2.5 | 4.3 | 7.2 | 4.3 | 4.3 |
| Stearic acid | 2.0 | 2.0 | 2.0 | 2.0 | 2.0 | 2.0 | 2.0 |
| MgO | 0.15 | 0.15 | 0.15 | 0.15 | 0.15 | 0.15 | 0.15 |
| *2^{nd} step* | | | | | | | |
| Zinc oxide | 3.0 | 3.0 | 3.0 | 3.0 | 3.0 | 3.0 | 3.0 |
| Struktol^{®} SU 95 | 0.5 | 0.5 | 0.5 | 0.5 | 0.5 | 0.5 | 0.5 |

### 1.3 Examples E13 and E14 (inventive) as well as C9 and C10 (comparative)

Examples E13 and E14 (inventive) and C9 and C10 (comparative) have been prepared in two steps with the same constituents as described for the examples E1 to E7 and C1 to C6, with the exception that no MBTS-80 GE has been used and instead N-cyclohexyl-2-benzothiazolsulfenamide (RHENOGRAN^{®} CLD-80) had been added in different amounts in case of each of examples E13, E14, C9 and C10. The amount of each constituent comprised in said examples is indicated in the following Table 4.

**1.4** Each of the compositions as shown in Tables 1, 2 and 4 was prepared using a HAAKE Rheomix^{®} 3000 S with Banbury style rotors set at 40 °C and 50 rpm using a fill factor of 70% in a two-step mixing cycle, following the procedure and conditions outlined in Table 5 for the 1^{st} step (variant (I)) and Table 7 for the 2^{nd} step. For each of the compositions shown in Table 3, an alternative 1^{st} step is carried out (variant (II). In variant (II) of the 1^{st} step, the same HAAKE Rheomix^{®} 3000 S with Banbury style rotors is set at 80 °C and after 5 min the rpm is increased to reach a temperature plateau of 150°C to 160°C which was kept for 3 to 5 minutes, as outlined in Table 6.

**Table 4 - Examples E13 and E14 and comparative examples C9 and C10**

| *Constituents* | *Examples [amounts in phr]* | | | |
|---|---|---|---|---|
| | *C9* | *C10* | *E13* | *E14* |
| *1^{st} step* | | | | |
| X_Butyl^{®} BB 2030 | 100 | 100 | 100 | 100 |
| CB | 60 | - | - | - |
| Lignin-based filler 3 | - | 60 | 60 | 60 |
| Processing oil | 12 | 12 | 12 | 12 |
| Stearic acid | 2.0 | 2.0 | 2.0 | 2.0 |
| MgO | 0.15 | 0.15 | 0.15 | 0.15 |
| Zinc oxide | 3.0 | 3.0 | 3.0 | 3.0 |
| *2^{nd} step* | | | | |
| Struktol^{®} SU 95 | 0.5 | 0.5 | 0.5 | 0.5 |
| Rhenogran^{®} CLD-80 | 1.9 | 1.9 | 1.4 | 0.94 |

**Table 5 - 1^{st} step variant (I)**

| *Time [min]* | *Ingredients* |
|---|---|
| 0 | Halobutyl rubber |
| 1 | additives¹ and 1/3 of fillers |
| 2 | 1/6 of fillers, ½ of processing oil, additional 1/6 of fillers |
| 4 | 1/6 of fillers, ½ of processing oil, additional 1/6 of fillers |
| 10 | Dump and sheet on open mill |

| | |
|---|---|
| ¹: stearic acid, MgO, zinc oxide. | |

**Table 6- 1^{st} step variant (II)**

| *Time [min]* | *Ingredients* |
|---|---|
| 0 | Halobutyl rubber |
| 1 | additives¹ and 1/3 of fillers |
| 2 | 1/6 of fillers, ½ of processing oil, additional 1/6 of fillers |
| 4 | 1/6 of fillers, ½ of processing oil, additional 1/6 of fillers and silane |
| 5 | Increase rpm to reach 150°C compound temperature |
| 10 | Dump and sheet on open mill |

| | |
|---|---|
| ¹: stearic acid, MgO, zinc oxide. | |

The resulting compositions treated according to both variants were homogenized in the open mill, placed on a cooling table, and then cooled to room temperature.

The compositions obtained after the respective 1^{st} step were again placed in the HAAKE Rheomix^{®} 3000 S set to the same conditions as for the 1^{st} step and the 2^{nd} step as described in Table 7 was carried out.

**Table 7 - 2^{nd} step**

| *Time [min]* | *Ingredients* |
|---|---|
| 0 | Composition after the 1^{st} step |
| 2 | all compounds listed for the 2^{nd} step |
| 5 | Dump and sheet on open mill |

The resulting compositions were homogenized and then cooled in the same way as described after the 1^{st} step. The compositions obtained after the 2^{nd} step were cured at 170 °C for a period of t₉₀ + 2 minutes.

### 2. Investigation of physical properties of the cured compositions as well as of the cure characteristics

### 2.1 Cure characteristics of examples E1 to E7 (inventive) as well as C1 to C6 (comparative)

The cure characteristics for curing the compositions of examples E1 to E7 as well as C1 to C6 have been investigated. The results of examples E1 to E4 as well as of C1 to C5 are summarized in Table 8 and the results of examples E5 to E7 as well as of C6 in Table 9.

**Table 8**

| *Parameters* | *Examples* | | | | | | | | |
|---|---|---|---|---|---|---|---|---|---|
| | *C1* | *C2* | *C3* | *C4* | *C5* | *E1* | *E2* | *E3* | *E4* |
| t₉₀ [min] | 3.71 | 9.69 | 25.08 | 24.24 | 22.32 | 14.11 | 12.39 | 12.12 | 14.17 |
| Difference M_{H} to M_{L} [dNm] | 3.19 | 3.75 | 4.13 | 5.26 | 5.66 | 6.03 | 7.45 | 7.61 | 8.81 |

**Table 9**

| *Parameters* | *Examples* | | | |
|---|---|---|---|---|
| | *C6* | *E5* | *E6* | *E7* |
| t₉₀ [min] | 10.69 | 9.07 | 10.63 | 11.91 |
| Difference M_{H} to M_{L} [dNm] | 7.86 | 9.09 | 8.38 | 7.14 |

As it is evident from Table 8, the use of lignin-based fillers without retarder in examples E1 to E4 further optimized the t₉₀ time, e.g., to >10 min, but <20 min, in particular in comparison to only CB comprising example C1. In particular, it is further evident that examples E1 to E4 comprising no retarder are still exhibiting an even more optimized t₉₀ time than C2 comprising both CB and a retarder. From Table 9 the same characteristics can be observed for compositions comprising both CB and a lignin-based filler. Further, as it is also evident from Table 8 each of lignin-based fillers in examples E1 to E4 shows an improved (increased) difference M_{H} to M_{L} vs. comparative examples C3 to C5, which comprise a retarder, and at the same time have still optimized t₉₀ times, i.e. sufficiently high t₉₀ times. The same applies when comparing examples E5 to E7 with comparative example C6. Example E4, being identical to example E1 with the exception of comprising 100 phr of filler 1 instead of 60 phr, shows a further increased difference between M_{H} to M_{L}. It can further be observed that example E7 comprising no zinc oxide also exhibits a further optimized t₉₀ time and a higher difference between M_{H} to M_{L} in comparison to comparative C5. Example E7 further exhibits a similar, albeit slightly lower t₉₀ time and difference between M_{H} to M_{L} in comparison to otherwise identical example E3.

### 2.2 Cure characteristics of examples E8 to E12 (inventive) as well as C7 and C8 (comparative)

The cure characteristics for curing the compositions of examples E8 to E12 as well as C7 and C8 have been investigated in the same manner as for the examples described hereinbefore. The results are summarized in Table 10.

**Table 10**

| *Parameters* | *Examples* | | | | | | |
|---|---|---|---|---|---|---|---|
| | *C7* | *C8* | *E8* | *E9* | *E10* | *E11* | *E12* |
| t₉₀ [min] | 3.83 | 17.97 | 16.13 | 21.98 | 21.72 | 21.97 | 20.16 |
| Difference M_{H} to M_{L} [dNm] | 3.06 | 3.99 | 6.23 | 5.90 | 5.89 | 5.75 | 5.45 |

As it is evident from Table 10 cured examples E8 to E12, but also comparative example C8, show an optimized t₉₀ time, but also an increased difference between M_{H} to M_{L} in comparison to only CB comprising and silane free example C7. The t₉₀ time of examples E8 to E12 is higher than those of the organosilane-free examples E1 to E7, demonstrating that the combination of organosilanes with lignin-based fillers is especially suited to further optimize the t₉₀ time.

### 2.3 Cure characteristics of examples E13 and E14 (inventive) as well as C9 and C10 (comparative)

The cure characteristics for curing the compositions of examples E13 and E14 as well as C9 and C10 have been investigated in the same manner as for the examples described hereinbefore. The results are summarized in Table 11.

**Table 11**

| *Parameters* | *Examples* | | | |
|---|---|---|---|---|
| | *C9* | *C10* | *E13* | *E14* |
| t₉₀ [min] | 9.65 | 16.73 | 15.27 | 14.45 |
| Difference M_{H} to M_{L} [dNm] | 5.27 | 8.10 | 7.81 | 7.65 |

As it is evident from Table 11, the respective use of 1.4 phr and 0.94 phr of a retarder (Rhenogran^{®} CLD-80) in cured examples E13 to E14 show slightly reduced but still optimized t₉₀ times and differences between M_{H} to M_{L} in comparison to example C10 comprising 1.9 phr retarder. Hence, it is evident that these properties can be achieved without any retarder present as well. The values of E13 and E14 and C10 are clearly optimized in comparison to example C9 comprising CB as filler and 1.9 phr of retarder.

### 2.4 Air permeability and other physical properties of examples E1 to E7 (inventive) as well as C1 to C6 (comparative)

The air permeability and some physical properties of the cured compositions of examples E1 to E7 (all inventive) as well as of examples C1 to C6 (all comparative) have been investigated according to the methods described in the 'methods' section. The results are summarized in Tables 12 and 13.

**Table 12**

| *Parameters* | *Examples* | | | | | | | | |
|---|---|---|---|---|---|---|---|---|---|
| | *C1* | *C2* | *C3* | *C4* | *C5* | *E1* | *E2* | *E3* | *E4* |
| Density [g/cm³] | 1.11 | 1.11 | 1.04 | 1.03 | 1.03 | 1.03 | 1.03 | 1.03 | 1.07 |
| Hardness [Shore A] | 47 | 48 | 44 | 48 | 49 | 48 | 51 | 53 | 62 |
| Tensile Strength [MPa] | 8.02 | 9.27 | 4.12 | 4.43 | 5.29 | 5.07 | 4.93 | 6.30 | 4.69 |
| Elongation at break [%] | 578 | 724 | 768 | 455 | 418 | 742 | 497 | 394 | 308 |
| Air permeability [10⁻¹⁷ m²/(Pa·s)] | 4.35 | 4.18 | 3.39 | 3.34 | 3.33 | 3.32 | 3.36 | 3.42 | 2.74 |

**Table 13**

| *Parameters* | *Examples* | | | |
|---|---|---|---|---|
| | *C6* | *E5* | *E6* | *E7* |
| Density [g/cm³] | 1.14 | 1.14 | 1.12 | 1.02 |
| Hardness [Shore A] | 62 | 62 | 62 | 54 |
| Tensile Strength [MPa] | 6.58 | 6.63 | 5.47 | 5.76 |
| Elongation at break [%] | 372 | 333 | 333 | 365 |
| Air permeability [10⁻¹⁷ m²/(Pa·s)] | 3.16 | 3.02 | 2.99 | nd¹ |

| | | | | |
|---|---|---|---|---|
| ¹: Not determined | | | | |

As it is evident from Tables 12 and 13 all examples comprising a lignin-based filler (E1 to E7 and C3 to C6) inter alia show an improved (reduced) air permeability in comparison to only CB comprising examples C1 and C2. By further increasing the amount of the lignin-based filler, e.g., from 60 phr as in example E1 to 100 phr as in example E4 or from 40 phr as in example E5 to 60 phr as in example E6, the air permeability is further improved.

Further, the cured examples E1 to E3 show a similar air permeability in comparison to their respective cured counterparts C3 to C5 comprising a retarder. Therefore, a retarder can be omitted without negatively affecting the air permeability.

### 2.5 Air permeability and other physical properties of examples E8 to E12 (inventive) as well as C7 (comparative)

In the same manner as for the examples described hereinbefore, examples E8 to E12 (all inventive) and C7 (comparative) have been investigated according to the methods described in the 'methods' section. The results are summarized in Table 14.

**Table 14**

| *Parameters* | *Examples* | | | | | | |
|---|---|---|---|---|---|---|---|
| | *C7* | *C8* | *E8* | *E9* | *E10* | *E11* | *E12* |
| Density [g/cm³] | 1.11 | 1.11 | 1.03 | 1.04 | 1.04 | 1.04 | 1.04 |
| Hardness [Shore A] | 48 | 47 | 51 | 52 | 52 | 53 | 50 |
| Tensile Strength [MPa] | 7.40 | 7.82 | 5.93 | 6.00 | 6.07 | 5.56 | 5.63 |
| Elongation at break [%] | 566 | 517 | 278 | 280 | 267 | 286 | 324 |
| air permeability [10⁻¹⁷ m²/( Pa·s)) | 4.16 | 6.19 | 3.28 | 3.57 | 3.53 | 3.50 | 3.64 |

As it is evident from Table 14 cured examples E8 to E12 show an improved (reduced) air permeability in comparison to only CB comprising examples C7 and C8 and which are similar to those of the organosilane-free counterparts E1 to E3. In addition, the air permeability is negatively impaired (increased) in comparative example C8 comprising CB, a silane, but no lignin-based filler compared to inventive examples E8 to E12 or to comparative example C7. Thus, the combination of lignin-based fillers and organosilanes in particular allow to achieve optimized t₉₀ times without any ill-effects on air permeability as shown in Tables 10 and 14 compared to compositions comprising lignin-based fillers but being organosilane-free.

### 2.6 Air permeability and other physical properties of examples E13 and E14 (inventive) as well as C9 and C10 (comparative)

**Table 15**

| *Parameters* | *Examples* | | | |
|---|---|---|---|---|
| | *C9* | *C10* | *E13* | *E14* |
| Density [g/cm³] | 1.11 | 1.03 | 1.03 | 1.03 |
| Hardness [Shore A] | 50 | 54 | 53 | 53 |
| Tensile Strength [MPa] | 10.48 | 6.33 | 6.00 | 6.17 |
| Elongation at break [%] | 518 | 368 | 381 | 356 |
| Air permeability [10¹⁷ m²/(Pa·s)] | 4.52 | 3.56 | 3.71 | 3.43 |

As it is evident from Table 15 cured examples E13 and E14 show an improved (reduced) air permeability in comparison to only CB comprising example C9.

## Claims

1. A curable rubber composition comprising
at least one halobutyl rubber, which is curable by means of at least one curing agent,
at least one curing agent, which is suitable for curing the at least one halobutyl rubber and which comprises at least one of sulfur, amines, phenolic resins, hydroquinones and peroxides, and
at least one lignin-based filler F1, which is different from carbon black, and which has an STSA surface area of up to 200 m²/g,
wherein the curable rubber composition comprises no or less than 0.45 phr 2,2'-dibenzothiazolyl disulfide (MBTS), and
wherein the total amount of any organic constituents of the curable rubber composition, which are suitable to retard the t₉₀ curing time, including 2,2'-dibenzothiazolyl disulfide, and which are different from both the at least one curing agent and the at least one halobutyl rubber and the at least one lignin-based filler F1, is less than 1.85 phr.

2. The curable rubber composition according to claim 1, **characterized in that** the curable rubber composition does not comprise 2,2'-dibenzothiazolyl disulfide (MBTS).

3. The curable rubber composition according to claim 1 or 2, **characterized in that** the total amount of any organic constituents, including 2,2'-dibenzothiazolyl disulfide, of the curable rubber composition, which are suitable to retard the t₉₀ curing time, preferably in the sense of the definition of the term "retarder" according to DIN ISO 1382:2023-08, is less than 1.35 phr, preferably less than 1.25 phr, more preferably less than 1.00 phr.

4. The curable rubber composition according to one or more of the preceding claims, **characterized in that** the organic constituent, which is suitable to retard the t₉₀ curing time, if present, is selected from sulfur-containing constituents, preferably from constituents, which bear at least one S-N-bond.

5. The curable rubber composition according to any one of the preceding claims, **characterized in that** the organic constituent, which is suitable to retard the t₉₀ curing time, if present, is selected from guanidines, biguanidines, thioles, thiazoles, sulfenamides, dithiocarbamates, xanthogenates, alkyl phenol disulfides, thioureas, thiurames, alkoxy thiocarbamates, alkoxy thiocarbonates, dialkyl thiophosphonates, diamino-2,4,6-triazinyls, and mixtures thereof.

6. The curable rubber composition according to any one of the preceding claims, **characterized in that** the organic constituent, which is suitable to retard the t₉₀ curing time, if present, is selected from 2-mercaptobenzo thiazole, 2,2'-dibenzothiazolyl disulfide, N-tert-butyl-2-benzothiazole sulfenamide, zinc dialkyldithiophosphate, benzothiazole disulfide, zinc butyl xanthate, N-dicyclohexyl-2-benzothiazole sulfenamide, N-cyclohexyl-2-benzothiazole sulfenamide, thiram, tetrabenzyl thiuram disulfide, tetramethyl thiuram monosulfide, tetramethyl thiuram disulfide, poly-tert-amylphenol disulfide, zinc dithiocarbamate, zinc diethyl dithiocarbamate, 2-morpholinothiobenzo thiazole, N-oxydiethylene benzothiazole-2-sulfenamide, N,N-diphenyl thiourea, dithiocarbamyl sulfenamide, N,N-diisopropyl benzothiozole-2-sulfenamide, zinc-2-mercapto toluimidazole, dithio bis(N-methyl piperazine), dithio bis(N-beta-hydroxy ethyl piperazine), dithio bis(dibenzyl amine), OTBG (o-tolylbiguanidine), DOTG (di-o-tolylguanidin), DPG (diphenyl guanidine) and mixtures thereof.

7. The curable rubber composition according to one or more of the preceding claims, **characterized in that** the curable rubber composition does not comprise any organic constituent, which is suitable to retard the t₉₀ curing time.

8. The curable rubber composition according to one or more of the preceding claims, **characterized in that** at least the least one filler F1 has an STSA surface area in a range of from 2.5 to 200 m²/g, preferably of from 5.0 to <200 m²/g, more preferably of from 7.5 to 175 m²/g, even more preferably of from 10.0 to 150 m²/g.

9. The curable rubber composition according to one or more of the preceding claims, **characterized in that** the least one filler F1 has an STSA surface area of >40.5 m²/g, preferably of >42.0 m²/g, more preferably of >45.0 m²/g.

10. The curable rubber composition according to one or more of the preceding claims, **characterized in that** the least one filler F1 is present in the curable rubber composition in an amount in a range of from 0.25 to 150 phr, preferably of from 0.75 to 125 phr, more preferably of from 1.00 to 100 phr, even more preferably of from 1.50 to 85 phr, yet more preferably of from 1.75 to 70 phr, most preferably of from 2.0 to 60 phr.

11. The curable rubber composition according to one or more of the preceding claims, **characterized in that** the least one filler F1 has a d99 value of <25 µm, preferably <20 µm, more preferably <18 µm, even more preferably <15 µm, still more preferably <10 µm.

12. The curable rubber composition according to one or more of the preceding claims, **characterized in that** the least one filler F1 has a carbon content in a range from >60% by weight to <90% by weight, preferably from >60% by weight to <85% by weight, more preferably from >60% by weight to ≤80% by weight.

13. The curable rubber composition according to one or more of the preceding claims, **characterized in that** the least one filler F1 has a weight average molecular weight in a range of from 1000 to 4000 Da, preferably of from 1300 to 3700 Da, more preferably of from 1700 to 3200 Da, yet more preferably of from 2500 to 3000 Da, still more preferably of from 2600 to 2900 Da, most preferably of from 2650 to 2850 Da, in each case when determined based on the soluble fraction of the filler F1.

14. The curable rubber composition according to one or more of the preceding claims, **characterized in that** it further comprises zinc oxide.

15. The curable rubber composition according to one or more of the preceding claims, **characterized in that** the at least one curing agent is present in the composition in an amount in a range of from 0.05 to 30 phr, preferably of from 0.2 to 20 phr, more preferably of from 0.5 to 12 phr, even more preferably of from 0.9 to 8.0 phr, most preferably of from 1.0 or 1.5 to 7.5 or to 7.0 phr.

16. The curable rubber composition according to one or more of the preceding claims, **characterized in that** the curable composition further comprises at least one organosilane, preferably at least one organosilane selected from organosilanes comprising at least one hydrolysable group and at least one non-hydrolysable group, more preferably from organosilanes comprising at least one hydrolysable group and comprising at least one sulfur-containing non-hydrolysable group.

17. The curable rubber composition according to claim 16, **characterized in that** the at least one organosilane is present in the curable rubber composition in an amount in a range of from 0.05 to 40 phr, preferably of from 0.20 to 30 phr, more preferably of from 0.40 to 20 phr, even more preferably of from 0.80 to 15 phr, yet more preferably of from 1.30 to 12 phr, most preferably of from 1.80 to 10 phr.

18. The curable rubber composition according to one or more of the preceding claims, **characterized in that** the curable composition further comprises at least one filler F2 and/or F3, which are different from one another and from the at least one filler F1, wherein the at least one filler F2 is carbon black, and wherein the at least one filler F3 is an inorganic filler, preferably is a silicate, more preferably is an aluminum silicate, most preferably is kaolin.

19. A kit-of-parts comprising, in spatially separated form,
as part A) at least part of a rubber composition as defined in any one or more of the preceding claims, wherein part A) does, however, not comprise the at least one curing agent, which is suitable for curing the at least one halobutyl rubber and which comprises at least one of sulfur, amines, phenolic resins, hydroquinones, and peroxides,
optionally as part B) the remaining part of the rubber composition as defined in any one or more of the preceding claims not being present in part A), wherein part B) does, however, not comprise the at least one curing agent, which is suitable for curing the at least one halobutyl rubber and which comprises at least one of sulfur, amines, phenolic resins, hydroquinones and peroxides, and
as part C) the at least one curing agent, which is suitable for curing the at least one halobutyl rubber and which comprises at least one of sulfur, amines, phenolic resins, hydroquinones and peroxides.

20. A cured rubber composition, which is obtainable by curing the curable rubber composition as defined in one or more of claims 1 to 18, or by curing a curable rubber composition obtainable by combining and mixing both A), optionally B), and C) of the kit-of-parts according to claim 19.

21. The cured rubber composition according to claim 20, **characterized in that** the cured rubber composition has an air permeability in a range of less than 4.10·10⁻¹⁷ m²/(Pa·s), preferably less than 4.00·10⁻¹⁷ m²/(Pa·s), more preferably less than 3.85·10⁻¹⁷ m²/(Pa·s), even more preferably less than 3.70·10⁻¹⁷ m²/(Pa·s), yet more preferably less than 3.55·10⁻¹⁷ m²/(Pa·s), still more preferably less than 3.50·10⁻¹⁷ m²/(Pa·s), particularly more preferably less than 3.45·10⁻¹⁷ m²/(Pa·s), most preferably less than 3.40·10⁻¹⁷ m²/(Pa·s).

22. A use of the curable rubber composition as defined in one or more of claims 1 to 18, of the kit-of-parts as defined in claim 19, or of the cured rubber composition as defined in claim 20 or 21, for manufacturing articles, parts and/or components, which preferably are suitable for use in the automotive and/or aerospace and/or engineering industry and/or pharmaceutical industry and/or consumer goods industry, which more preferably are suitable for the manufacture of rubber items requiring gas impermeability, especially hoses, personal protection equipment, protective clothing, pharmaceutical closures, vacuum seals and membranes, tank linings, conveyor belts, consumer products, in particular ball bladders, and tires, in particular as being used as or as at least part of inner liners of tires, even more preferably are suitable for the manufacture of air tires.

23. An article, part and/or component, which is in each case obtainable from the curable rubber composition as defined in one or more of claims 1 to 18, from the kit-of-parts as defined in claim 19, or from the cured rubber composition as defined in claim 20 to 21, and which is suitable for use in the automotive and/or aerospace and/or engineering industry and/or pharmaceutical industry and/or consumer goods industry, which preferably is suitable for use in rubber items requiring gas impermeability, especially hoses, personal protection equipment, protective clothing, pharmaceutical closures, vacuum seals and membranes, tank linings, conveyor belts, consumer products, in particular ball bladders, and tires, in particular as being used as or as at least part of inner liners of tires, more preferably is suitable for use in air tires.

24. A process for preparing the article, part and/or component as defined in claim 23, wherein said process comprises at least one step, according to which the curable rubber composition as defined in one or more of claims 1 to 18 is shaped into the article, part and/or component, preferably before curing has been performed, by at least one of injection molding, compression molding, transfer molding, extrusion, coextrusion, extrusion coating, laminating, calendaring, or a combination thereof, e.g., a combination of extrusion or coextrusion and calendaring.
